# EUROPEAN PATENT APPLICATION

(11) **EP 1 998 083 A1**
(43) Date of publication of application: **03.12.2008**
(21) Application number: 07010712.3
(22) Date of filing: 30.05.2007
(51) Int. Cl.: F16H 61/36

(54) **Gear shift system for operating a pair of transmission cables**

(71) Applicant: Kongsberg Automotive AB, 56528 Mullsjö (SE)
(72) Inventor: Melander, Ingemar, 565 93 Mullsjö (SE)
(74) Representative: UEXKÜLL & STOLBERG

(57) **Abstract**

The present invention relates to a gear shift system for operating a pair of transmission cables, comprising a shift lever (1) having a longitudinal shift lever axis (A) mounted on a first yoke (32) of a double joint (3) to pivot about two orthogonal axes, namely a shifter pivot axis (B) and a selection pivot axis (C) both essentially orthogonal to the shift lever axis (A), an attachment member (2), a shifter control lever (4) that is connected to a second yoke (34) of the double joint (3) and controls a shifter control cable and a selection control lever (5) that is connected by a bushing (51) to the first yoke (32) of the double joint (3) and controls a selection control cable, characterised in that the first yoke of the double joint (3) is rotatable about the shift lever axis (A), such that it rotates about the shift lever axis (A) during a pivot movement of the shift lever (1) about the selection pivot axis (C). To achieve the goal of a movement of the shift lever knob that follows a nearly perfect "H"-pattern, the invention uses the fact that a slight rotation of the first yoke (32) of a double joint (3) about the shift lever axis (A) during a pivot movement of the shift lever 1 about the selection pivot axis (C) compensates for an unwanted coordinated pivot movement of the shift lever (1) about the selection pivot axis (C) during a nearly straight forward-backward movement of the shift lever knob.

## Description

The present invention relates to a gear shift system for operating a pair of transmission cables, comprising a shift lever having a longitudinal shift lever axis mounted on a first yoke of a double joint to pivot about two orthogonal axes, namely a shifter pivot axis and a selection pivot axis both essentially orthogonal to the shift lever axis, an attachment member, a shifter control lever that is connected to a second yoke of the double joint and controls a shifter control cable and a selection control lever that is connected by a bushing to the first yoke of the double joint and controls a selection control cable.

Modern vehicles comprise gear shift systems that transfer gear select and shift commands by means of transmission cables. These bowden, or push-pull, cables are manipulated by an operation of the shift lever and a mechanical system that transfers the shift lever movement into the appropriate cable actuation. Most known gear shift systems comprise a pair of transmission cables, one for the transmission of the shift select command and the other one for the gear shift command.

EP 662 203 B1 discloses a gear shift system according to the preamble of claim 1. In particular, a manual transmission shifter for operating a pair of transmission cables is described which comprises a base that includes a housing in which the mechanical system that transfers the shift lever movement into the appropriate cable actuation is located. The two cables are connected to a bell crank and a cable control member, respectively, such that an independent movement of the two cables is enabled.

Other gear shift systems for operating a pair of transmission cables are known from e.g. DE 9002840 U1 or US 4,693,135.

All those known gear shift systems suffer from the fact that the movement of the shift lever knob exhibits a relatively large deviation from a perfect "H"-pattern. The shift lever knob follows an outwardly bent curve (seen from above) during a forward-backward movement (shift command) of the shift lever after having performed a selection command by a deflection of the shift lever to the left or to the right. An "H"-pattern guidance of the shift lever must allow a play for such deviations. The deviations from the perfect "H"-pattern have a negative effect on the driving comfort, the functionality and the durability of the gear shift system.

It is therefore an object of the present invention to provide a gear shift system for operating a pair of transmission cables that overcomes the disadvantages of the systems known in the prior art. The movement of the shift lever knob should follow a nearly perfect "H"-pattern.

This object is achieved by the present inventive gear shift system according to the characterising features of independent claim 1. Preferred embodiments of the invention are covered by the dependent claims.

To achieve the goal of a movement of the shift lever knob that follows a nearly perfect "H"-pattern, the invention uses the fact that a slight rotation of certain parts of the gear shift system about the longitudinal axis of the shift lever during a pivot movement of the shift lever about at least one of the two orthogonal axes of the "H"-pattern can compensate for an unwanted coordinated left-right movement of the shift lever during a straight forward-backward movement of the shift lever knob.

The rotation of certain parts of the gear shift system about the longitudinal axis of the shift lever necessary to achieve a considerably straighter "H"-pattern is quite small though. This rotation is implemented by using a double joint on which the shift lever is mounted.

According to the present invention the gear shift system is characterised in that the first yoke of the double joint is rotatable about the shift lever axis, such that it rotates about the shift lever axis during a pivot movement of the shift lever about the selection pivot axis. In this sense, the double joint as it is used in the present invention is similar to a rotatable cardan or universal joint.

When the shift lever has performed a selection motion by a deflection of the shift lever to the left or to the right, a perfectly straight movement (seen from above) of the shift lever knob in the forward-backward direction in order to shift gears implies a coordinated slight outward rotation about the selection pivot axis. As the select command should be independent of the shift command this coordinated slight outward rotation about the selection pivot axis should not be transferred to the selection control lever. The feature that the first yoke of the double joint that is connected to the shift lever is able to rotate about the shift lever axis during a pivot movement of the shift lever compensates the coordinated slight outward rotation about the selection pivot axis almost completely. The inventive gear shift system is arranged such that, when the shift lever is deflected to the left or the right, a rotation about the shift lever axis into the one or the other direction is transferred to the selection lever to actuate into the one or the other direction, respectively. The amount of such an actuation of the selection lever by rotation of the first yoke of the double joint about the shift lever axis is suited to compensate the unwanted coordinated slight outward rotation about the selection pivot axis during a straight movement (seen from above) of the shift lever knob in the forward-backward direction. The further outward the deflection to left or right is after having performed a selection motion, the more compensation by rotation of the first yoke of the double joint about the shift lever axis is needed.

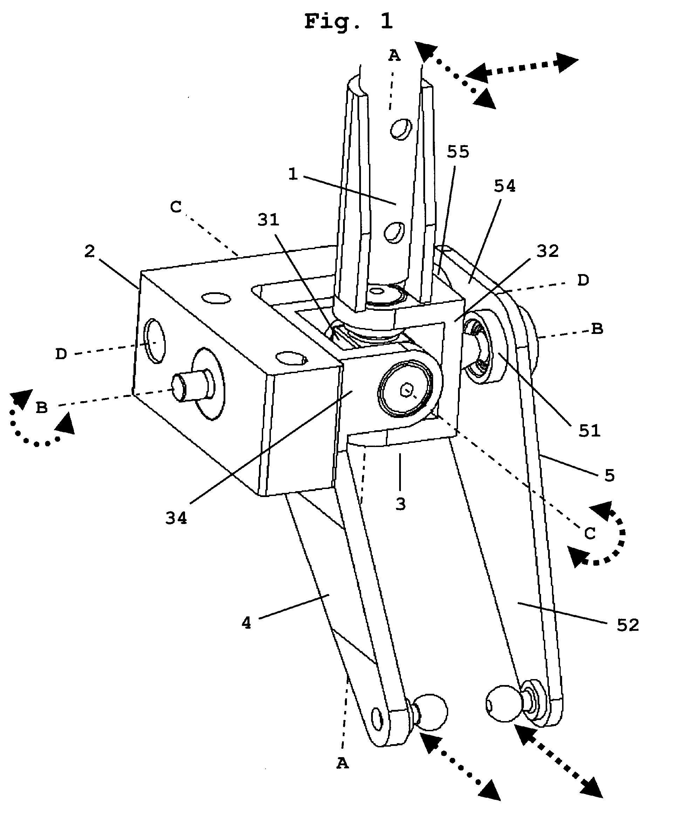

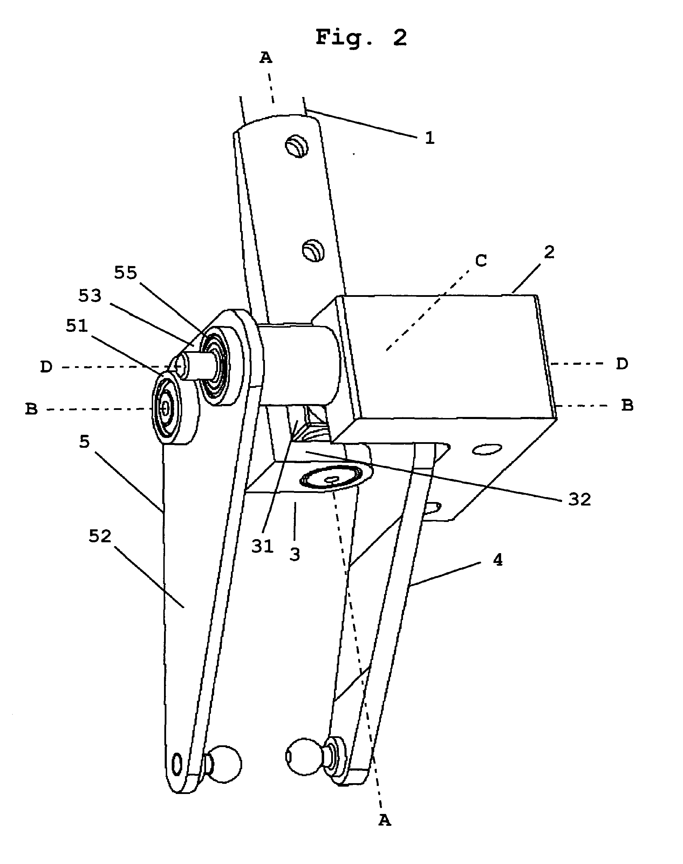

In the following the invention is discussed in detail on the basis of a preferred embodiment that is depicted in the figures 1 and 2. Nevertheless, the scope of the invention is not limited to the depicted embodiment.

Figure 1 illustrates the mechanical system to transfer movement of the shift lever to a pair of transmission cables (not shown) in form of a perspective front view.

Figure 2 illustrates the mechanical system to transfer movement of the shift lever to a pair of transmission cables (not shown) in form of a perspective rear view.

Figure 2 illustrates schematically the path of the shift lever knob in a top view.

Figures 1 and 2 show a shift lever 1 having a longitudinal shift lever axis A mounted on a first yoke 32 of a double joint 3. The cruciform 31 of the double joint is positioned with one axis along the shift lever axis A and the other one along a selection pivot axis C. The shift lever 1 is fixed to the upper leg 33 of the first yoke 32 of the double joint 3 that engages the trunnions of the cruciform 31 arranged along the shift lever axis A. The second yoke 34 of the double joint 3 that engages the other trunnions of the cruciform 31 that are arranged along the along the selection pivot axis C is attached rotatably about a shifter pivot axis B to an attachment member 2. A shifter control lever 4 extends from the second yoke 34 of the double joint 3 downwards to transfer gear shift commands from the shift lever 1 to the gear box by a connection to a shifter control cable (not shown) at the lower end portion of the shifter control lever 4.

The dotted double-arrows indicate the forward-backward shift command movement of the shift lever 1 that results in a pivot movement about the across vehicle shifter pivot axis B and a backward-forward movement of the lower end portion of the shifter control lever 4. This backward-forward movement of the lower end portion of the shifter control lever 4 actuates the connected bowden, or push-pull, transmission cable (not shown) to transfer the gear shift command to the gear box.

The first yoke 32 of the double joint 3 is connected by a bushing 51 to the selection control lever 5. The selection control lever 5 is in this embodiment a bell crank lever. One leg 52 of the bell crank lever extends downwards essentially in parallel to the shifter control lever 4 to transfer gear select commands from the shift lever 1 to the gear box by a connection to a selection cable (not shown) at the lower end portion of the selection control lever 5.

The selection control lever 5 is attached rotatably about an axis D that is displaced with respect to the essentially parallel shifter pivot axis B by a bearing 55 to the attachment member 2. In this embodiment the attachment member 5 is an L-shaped body enclosing the double joint 3 in a horizontal plane. The selection control lever 5 is a bell crank lever, of which one leg 54 extends essentially horizontally between the axis D that is horizontally displaced with respect to the parallel shifter pivot axis B and the shifter pivot axis B and of which the other leg 52 extends downwards essentially in parallel to the shifter control lever 4 such that it is able to transfer gear select commands from the shift lever 1 to the gear box by a connection to a selection control cable at the lower end portion of the selection control lever 5. As shown in the illustrated embodiment, the selection control lever 5 can be a bell crank lever in form of a flat triangular member.

The shifter control lever 4 and the selection control lever 5 need not extend downwards in a vertical way. It can be advantageous that the shifter control lever 4 and the selection control lever 5 extend downwards with an inclination angle with respect to the shift lever axis A.

The connection of the first yoke 32 of the double joint 3 and the selection control lever 4 by a bushing 51 is preferably embodied by a male component with a spherical end portion connected. The male component is connected to the first yoke 32 of the double joint 3 and its spherical end portion is engaged by a preferably tubular bushing with a circular cross-section that allows the spherical end portion of the male component to slide along the shifter pivot axis B.

It is advantageous to provide a plastic shell with an inner spherical face to engage the ball and an outer cylindrical face that is longitudinally slidable in the tubular bushing of the sliding joint 51.

The dashed double-arrows indicate the left-right select command movement of the shift lever 1 that results in a pivot movement about the selection pivot axis C and a backward-forward movement of the lower end portion of the selection control lever 5. To transfer the left-right movement of the shift lever 1 to a backward-forward movement of the end portion of the selection control lever 5 the selection control lever 5 has the form of a bell crank lever. Upon a left-right select command movement of the shift lever 1 the male component connected to the first yoke 32 of the double joint 3 follows a circular path in down-up direction about the selection pivot axis C. The bushing 51 in the knee portion of the selection control lever 5 is urged to follow the down-up direction by a rotation about the axis D that the selection control lever 5 can pivot about. As the paths of the male component and the bushing 51 do not exactly coincide the bushing 51 must provide a play in a direction other than the vertical axis A. Preferably, that direction extends along the shifter pivot axis B as shown in the figures 1 and 2. Although less advantageous, it is another possibility to design the bushing in form of an elongate opening in the selection control lever 5, where the opening extends essentially along the selection pivot axis C to allow a play in the direction of the selection pivot axis C.

The lower end portion of the selection control lever 5 moves in accordance with the left-right movement of the shift lever 1 in a backward-forward direction. This backward-forward movement of the lower end portion of the selection control lever 5 actuates the connected bowden, or push-pull, transmission cable (not shown) to transfer the gear select command to the gear box.

For the spherical end portion of the male component that is connected to the first yoke 32 of the double joint 3 to follow the rotational movement of the selection control lever 5 about the axis D that the selection control lever 5 can pivot about, it must be able to move slightly along the selection pivot axis C. As the spherical end portion of the male component is engaged by the tubular bushing 51 in the depicted embodiment this slight movement along the selection pivot axis C of the spherical end portion of the male component is only possible if the first yoke 32 of the double joint 3 that the male component is attached to is able to rotate slightly about the shift lever axis A. A select command in form of a shift lever movement to the left coincides with a slight counter-clockwise rotation of the first yoke 32 of the double joint 3 about the shift lever axis A. Vice versa, a select command in form of a shift lever movement to the right coincides with a slight clockwise rotation of the first yoke 32 of the double joint 3 about the shift lever axis A.

Once the shift lever 1 is deflected to the left or the right, a rotation the first yoke 32 of the double joint 3 about the shift lever axis A implies a certain actuation of the selection lever 5 depending on the play along the shifter pivot axis B that is allowed by the bushing 51. This effect is used to compensate for the coordinated outward pivoting of the shift lever 1 that is necessary to perform a perfect "H"-pattern with the shift lever knob during a forward-backward movement of a shift command once the shift lever 1 is deflected to the left or the right.

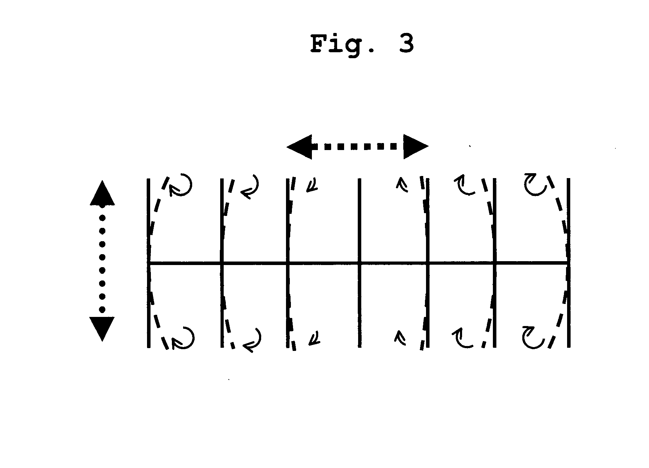

Figure 3 shows schematically the "H"-pattern of the shift lever knob seen from above. The shift lever knob in gear shift systems known from the prior art follow an ellipsoidal path as it is illustrated by the dashed curves. The perfect "H"-pattern implies a coordinated outward pivoting of the shift lever 1 about the selection pivot axis C. At the same time it is desirable that the selection control lever 5 is not affected by this. When the shift lever 1 is forced to follow a nearly perfect "H"-pattern by appropriate guiding means (not shown), the first yoke 32 of the double joint 3 reacts with a slight rotation about the shift lever axis A to compensate for the coordinated outward pivoting about the selection pivot axis C. As a result of this, the selection control lever 5 is not affected although the shift lever 1 performs a coordinated outward pivoting about the selection pivot axis C. The circular arrows in figure 3 show qualitatively the compensating rotation of the first yoke 32 of the double joint 3 about the shift lever axis A.

## Claims

1. Gear shift system for operating a pair of transmission cables, comprising a shift lever (1) having a longitudinal shift lever axis (A) mounted on a first yoke (32) of a double joint (3) to pivot about two orthogonal axes, namely a shifter pivot axis (B) and a selection pivot axis (C) both essentially orthogonal to the shift lever axis (A), an attachment member (2), a shifter control lever (4) that is connected to a second yoke (34) of the double joint (3) and controls a shifter control cable and a selection control lever (5) that is connected by a bushing (51) to the first yoke (32) of the double joint (3) and controls a selection control cable,
**characterised in that**
the first yoke (32) of the double joint (3) is rotatable about the shift lever axis (A), such that it rotates about the shift lever axis (A) during a pivot movement of the shift lever (1) about the selection pivot axis (C).

2. Gear shift system according to claim 1, wherein the second yoke (34) of the double joint (3) and the connected shifter control lever (4) are attached rotatably about shifter pivot axis (B) to the attachment member (2).

3. Gear shift system according to claim 1 or 2, wherein the shifter control lever (4) extends downwards such that it is able to transfer gear shift commands from the shift lever (1) to the gear box by a connection to a shifter control cable at the lower end portion of the shifter control lever (5).

4. Gear shift system according to any one of the preceding claims, wherein the selection control lever (5) is attached rotatably about an axis (D) that is displaced with respect to the essentially parallel shifter pivot axis (B) to the attachment member (2).

5. Gear shift system according to claim 4, wherein the selection control lever (5) is a bell crank lever, of which one leg (54) extends essentially horizontally between the axis (D) that is horizontally displaced with respect to the parallel shifter pivot axis (B) and the shifter pivot axis (B) and of which the other leg (52) extends downwards essentially in parallel to the shifter control lever (4) such that it is able to transfer gear select commands from the shift lever (1) to the gear box by a connection to a selection control cable at the lower end portion of the selection control lever (5).

6. Gear shift system according to any one of the preceding claims, wherein the selection control lever (5) is a bell crank lever in form of a flat triangular member.

7. Gear shift system according to any one of the preceding claims, wherein the attachment member (2) is an L-shaped body enclosing the double joint (3) in a horizontal plane.

8. Gear shift system according to any one of the preceding claims, wherein the shifter control lever (4) and the selection control lever (5) extend downwards with an inclination angle with respect to the shift lever axis (A).

9. Gear shift system according to any one of the preceding claims, wherein the bushing (51) engages the spherical end portion of a male component which is connected to the first yoke (32) of the double joint (3) and which is able to slide along the shifter pivot axis (B) in the bushing (51).

10. Gear shift system according to any one of the preceding claims, wherein the bushing (51) extends along the shifter pivot axis (B) in a tubular form with a circular cross-section.

11. Gear shift system according to claim 9 and 10, wherein a plastic shell with an inner spherical face to engage the spherical end portion of the male component connected to the first yoke (32) of the double joint (3) and an outer cylindrical face that is longitudinally slidable in the tubular bushing (51) is provided.
